# FASCICULE DE BREVET EUROPEEN

(11) **EP 3 612 844 B1**
(45) Date de publication et mention de la délivrance du brevet: **03.08.2022**
(21) Numéro de dépôt: 18725268.9
(22) Date de dépôt: 10.04.2018
(51) Int. Cl.: G01N 35/00, B65D 83/04

(54) **DISPOSITIF DE CONDITIONNEMENT DE BILLES POUR CUVETTES DE RÉACTION DESTINÉES À UN APPAREIL D'ANALYSE**
VORRICHTUNG ZUM VERPACKEN VON KUGELN FÜR REAKTIONSGEFÄSSE FÜR EIN ANALYSEGERÄT
DEVICE FOR PACKAGING BALLS FOR REACTION VESSELS FOR AN ANALYSIS APPLIANCE

(30) Priorité: 20.04.2017 FR 1753414
(43) Date de publication de la demande: 26.02.2020
(73) Titulaire: Diagnostica Stago, 92600 Asnières-sur- Seine (FR)
(72) Inventeur: BROSSARD, Matthieu, 92500 Rueil-Malmaison (FR)
(74) Mandataire: Ernest Gutmann - Yves Plasseraud S.A.S.
(86) Numéro de dépôt international: PCT/FR2018/050898
(87) Numéro de publication internationale: WO 2018/193184

(56) Documents cités:
- US-A- 4 101 284
- US-A- 4 150 766
- US-A- 4 405 060
- US-A- 4 918 984
- US-A- 5 014 877
- US-A- 5 336 469
- US-A1- 2005 175 502
- US-A1- 2006 012 130
- US-A1- 2006 275 178
- US-A1- 2008 011 773
- US-A1- 2014 171 344

## Description

La présente invention concerne un dispositif de conditionnement de billes pour cuvettes de réaction destinées à un appareil d'analyse, tel qu'un appareil d'analyse automatique d'échantillons chimiques ou biologiques.

De tels appareils sont par exemple utilisés pour la détermination des temps de modification de l'état physique d'un milieu, en particulier pour la détermination du temps de coagulation d'un échantillon de sang.

On connaît déjà, par les documents EP 0 325 874 et WO 03/065047, des cuvettes de réaction qui sont utilisées pour la détermination des temps de modification de l'état physique d'un milieu, en particulier pour la détermination du temps de coagulation d'un échantillon de sang. Ces cuvettes sont ouvertes à leur extrémité supérieure et comportent un fond incurvé formant un chemin de roulement d'une bille de matériau ferromagnétique qui est déplaçable dans la cuvette en un mouvement périodique au moyen d'un champ magnétique extérieur. Les variations d'amplitude et/ou de fréquence des déplacements de la bille sont représentatives de l'état physique de l'échantillon de sang. D'autres exemples de documents montrant des dispositifs de conditionnement de billes sont : US2014/0171344, US2006/0275178, US5336469, US4101284, US4405060, US2008/0011773, US5014877 et US4150766.

Dans le document WO-A-03/065047, les cuvettes contenant les billes sont fixées côte à côte de façon détachable sur un film support souple qui obture leurs extrémités supérieures et qui peut être enroulé sur une bobine pour alimenter un appareil automatique d'analyse et faire défiler les cuvettes en succession dans l'appareil.

Si l'on souhaite introduire une bille dans chaque cuvette avant analyse, une telle introduction peut être réalisée de façon automatisée, au sein de l'appareil d'analyse. Cela permet notamment que certaines cuvettes soient utilisées pour de nouveaux tests pour lesquels l'utilisation de billes n'est pas nécessaire. Pour chaque cuvette, selon le test à pratiquer, on pourra donc insérer ou non une bille dans ladite cuvette.

L'invention a notamment pour but d'apporter une solution simple, efficace et économique à ce problème.

A cet effet, elle propose un dispositif de conditionnement de billes pour cuvettes de réaction destinées à un appareil d'analyse, tel que défini dans la revendication 1.

Le dispositif de conditionnement de billes permet de loger des billes et d'autoriser leur retrait hors du corps, par déplacement relatif de l'organe d'obturation par rapport au corps. A cet effet, il est par exemple possible de maintenir le corps fixe et de déplacer l'organe d'obturation, ou inversement de maintenir l'organe d'obturation fixe et de déplacer le corps.

Le corps peut comporter une première partie et une seconde partie montée sur la première partie ou dans la première partie, lesdites première et seconde parties délimitant un logement pour les billes, l'organe d'obturation étant monté dans ledit logement.

La seconde partie peut être fixée à la première partie par des moyens d'encliquetage, lesdits moyens d'encliquetage étant conçus pour autoriser le montage par encliquetage desdites parties et empêcher le retrait de la seconde partie par rapport à la première partie après encliquetage desdites parties.

Le démontage de la seconde partie et de la première partie est ainsi empêché par les moyens d'encliquetage. Il n'est alors pas possible de recharger le dispositif en billes, par exemple. Le dispositif est donc à usage unique.

L'organe d'obturation est monté pivotant par rapport au corps.

L'axe de pivotement est de préférence l'axe du corps et/ou l'axe de l'organe d'obturation.

Le corps comporte une empreinte destinée au passage d'un organe de couplage, l'organe d'obturation comportant une empreinte apte à coopérer avec l'organe de couplage, l'empreinte de l'organe d'obturation étant située en regard de l'empreinte du corps dans la position fermée et étant écartée angulairement de l'empreinte du corps dans la position ouverte.

Ainsi, en utilisation, lorsque le dispositif de conditionnement est fermé de façon à retenir les billes, l'organe de couplage peut être introduit au travers de l'empreinte du corps jusqu'à venir se loger dans l'empreinte de l'organe d'obturation. La rotation relative de l'organe de couplage par rapport au corps entraîne celle de l'organe d'obturation, par coopération de forme entre l'organe de couplage et l'empreinte de l'organe d'obturation.

L'organe d'obturation peut ainsi être déplacé vers sa position ouverte permettant le passage de billes au travers de l'ouverture du corps. On notera que, en position ouverte, le dispositif est maintenu sur l'organe de couplage. En effet, l'empreinte du corps n'étant plus alignée ou en regard de l'empreinte de l'organe d'obturation, l'empreinte du corps ne permet plus le retrait de l'organe de couplage. On sécurise ainsi l'opération de transfert des billes du dispositif vers l'appareil d'analyse.

L'organe d'obturation et le corps peuvent comporter des moyens de guidage permettant d'autoriser la rotation de l'organe d'obturation par rapport au corps, uniquement d'une position de départ fermée vers une position ouverte, puis uniquement de la position ouverte vers une position fermée finale.

Les moyens de guidage permettent de diriger la rotation de l'organe d'obturation, à la manière d'une roue à rochet par exemple, en empêchant toute rotation opposée à la rotation autorisée. Ce guidage se fait en deux phases successives. Dans une première phase, seul le déplacement de l'organe d'obturation vers sa position ouverte est autorisé. Dans une seconde phase, qui démarre lorsque l'organe d'obturation est totalement ouvert, seul le déplacement de l'organe d'obturation vers sa position fermée est autorisé. A l'issue de la seconde phase, le dispositif est complètement fermé et il ne peut plus être rouvert. Il n'est donc plus utilisable.

Lors de la première phase et/ou lors de la seconde phase, les moyens de guidage peuvent être conçus pour éviter d'ouvrir ou de fermer partiellement le dispositif puis de le refermer ou de l'ouvrir, respectivement.

Les moyens de guidage peuvent comprendre une première zone d'encliquetage et une seconde zone d'encliquetage opposées, lesdites zones d'encliquetage étant par exemple crantées ou dentées, lesdits moyens de guidage comportant en outre une languette élastique coopérant avec la première zone d'encliquetage lors de la rotation de l'organe d'obturation par rapport au corps, de sa position de départ fermée vers sa position ouverte, la languette élastique coopérant avec la seconde zone d'encliquetage lors de la rotation de l'organe d'obturation par rapport au corps, de sa position ouverte vers sa position fermée finale, les zones d'encliquetage appartenant à l'organe d'obturation, la languette élastique appartenant au corps, ou inversement.

Chaque zone d'encliquetage peut s'étendre circonférentiellement en arc de cercle.

Chaque zone d'encliquetage peut être dentée et peut s'étendre globalement dans un plan radial, chaque dent comportant une surface inclinée par rapport au plan radial correspondant et une surface de butée s'étendant globalement perpendiculairement au plan radial.

Les zones dentées autorisent une rotation dans un seul sens de l'organe d'obturation par rapport au corps. En outre, les zones dentées peuvent également être utilisées à la manière de moyens d'indexation, de façon à créer des positions intermédiaires d'ouverture ou de fermeture, notamment pour réguler le débit d'évacuation des billes hors du corps.

Les zones d'encliquetage peuvent comporter des surfaces inclinées permettant un coulissement de la languette le long desdites surfaces inclinées, par déformation élastique de la languette, lors de la rotation de l'organe d'obturation par rapport au corps dans le sens autorisé.

Les zones d'encliquetage peuvent également comporter des surfaces de butée, la languette étant apte à venir en appui contre lesdites surfaces de butée, de façon à empêcher la rotation de l'organe d'obturation par rapport au corps dans le sens contraire au sens autorisé.

Les moyens de guidage peuvent comprendre des moyens de butée aptes à limiter la rotation de l'organe d'obturation entre ses positions ouverte et fermée.

Les moyens de butée sont par exemple formés par la languette élastique et des surfaces s'étendant perpendiculairement au plan radial, c'est-à-dire selon l'axe de rotation. Ainsi, en position fermée ou en position ouverte, la languette est apte à venir en appui sur la surface de butée correspondante.

L'organe d'obturation peut comprendre au moins une portion d'hélice inclinée en direction d'au moins une ouverture de l'organe d'obturation.

La portion d'hélice facilite alors l'évacuation des billes en les dirigeant par gravité vers l'ouverture. L'ouverture de l'organe d'obturation et l'ouverture du corps sont alignées ou en regard l'une de l'autre, en position ouverte, et écartées l'une de l'autre, en position fermée.

La première partie du corps peut comporter une paroi cylindrique s'étendant depuis une paroi de fond.

La première partie du corps peut former un couvercle.

L'ouverture et/ou l'empreinte peuvent être ménagées dans le fond de la première partie. Des lumières peuvent être ménagées dans la paroi cylindrique de la première partie. Lesdites lumières peuvent appartenir aux moyens d'encliquetage de la première partie par rapport à la seconde partie du corps, lesdites lumières servant par exemple à l'engagement de saillies d'encliquetage de la seconde partie du corps.

La seconde partie du corps peut comporter une paroi globalement cylindrique s'étendant depuis une paroi de fond. La paroi de fond de la seconde partie du corps peut être opposée à la paroi de fond de la première partie du corps.

La seconde partie du corps peut être montée, au moins en partie, dans la paroi cylindrique de la première partie du corps.

L'empreinte peut être en forme de croix.

La seconde partie du corps peut être réalisée dans un matériau transparent tel que du verre ou du plastique par exemple.

La paroi cylindrique peut comporter des zones planes ou une forme polygonale, par exemple pentagonale, destinées à faciliter la préhension.

La première partie du corps peut comprendre au moins deux ouvertures, par exemple quatre ouvertures régulièrement réparties sur la circonférence.

L'organe d'obturation peut comprendre un cône central guidant les billes vers la portion d'hélice.

Les billes présentent un diamètre compris entre 1 et 2 mm, par exemple.

L'invention concerne également un ensemble comportant un dispositif de conditionnement du type précité, et un dispositif de collecte, le dispositif de collecte comprenant :
- un support, ledit support comprenant au moins une ouverture et des moyens de collecte, ladite ouverture étant destinée à être située en regard de l'ouverture du corps du dispositif de conditionnement,
- un organe d'obturation mobile par rapport au support entre une position fermée dans laquelle l'organe d'obturation ferme l'ouverture du support, et une position ouverte dans laquelle l'ouverture du support est ouverte,
- un organe de couplage destiné à coopérer avec l'organe d'obturation du dispositif de conditionnement, l'organe de couplage étant mobile en rotation avec l'organe d'obturation du dispositif de collecte, de sorte qu'en position ouverte de l'organe d'obturation et de l'organe de couplage du dispositif de collecte, les billes issues du dispositif de conditionnement traversent les ouvertures de l'organe d'obturation et du corps du dispositif de conditionnement puis l'ouverture du support du dispositif de collecte avant d'être acheminées vers les moyens de collecte.

L'ensemble peut comporter des moyens d'indexation aptes à maintenir l'organe d'obturation du dispositif de collecte respectivement en position ouverte et en position fermée.

Les moyens d'indexation peuvent comporter un organe élastique apte à venir en appui sur des zones d'indexation en saillie de l'organe d'obturation.
- L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective, de dessus, d'un dispositif de collecte d'un appareil d'analyse, en position fermée,
- la figure 2 est une vue en perspective, de dessous, d'un dispositif de collecte d'un appareil d'analyse, en position fermée,
- la figure 3 est une vue en coupe radiale du dispositif de collecte, en position fermée,
- la figure 4 est une vue en perspective, de dessus, d'un dispositif de collecte d'un appareil d'analyse, en position ouverte,
- la figure 5 est une vue en coupe radiale du dispositif de collecte, en position ouverte,
- la figure 6 est une vue en perspective, de dessous, d'un dispositif de conditionnement de billes, selon une première forme de réalisation de l'invention,
- la figure 7 est une vue éclatée, en perspective, du dispositif de la figure 6,
- la figure 8 est une vue en perspective, de dessus, de la seconde partie du corps,
- la figure 9 est une vue en perspective, de dessous, de la seconde partie du corps,
- la figure 10 est une vue de détail d'une zone de la figure 9,
- la figure 11 est une vue en perspective, de dessus, de la première partie du corps,
- la figure 12 est une vue en perspective, de dessous, de l'organe d'obturation,
- la figure 13 est une vue en perspective, de dessus, de l'organe d'obturation,
- les figures 14 et 15 sont des vues de détail de zones de la figure 13,
- la figure 16 est une vue de dessous du dispositif de conditionnement, dans une position de départ fermée,
- la figure 17 est une vue en coupe radiale dudit dispositif dans la position de départ fermée,
- la figure 18 est une vue de détail d'une zone de la figure 17,
- les figures 19, 20; 21, 22; 23, 24 sont des vues correspondant respectivement aux figures 16 et 18, montrant plusieurs positions intermédiaires d'ouverture successives,
- les figures 25 et 26 sont des vues correspondant respectivement aux figures 16 et 18 montrant la position complètement ouverte,
- les figures 27 et 28 sont des vues correspondant respectivement aux figures 16 et 18 montrant une position de fermeture partielle,
- les figures 29 et 30 sont des vues correspondant respectivement aux figures 16 et 18 montrant la position fermée finale,
- la figure 31 est vue éclatée, en perspective, d'un dispositif de conditionnement de billes selon une seconde forme de réalisation de l'invention,
- la figure 32 est une vue en coupe axiale et en perspective du dispositif,
- la figure 33 est une vue en perspective de la première partie du corps,
- la figure 34 est une vue en perspective de l'organe d'obturation,

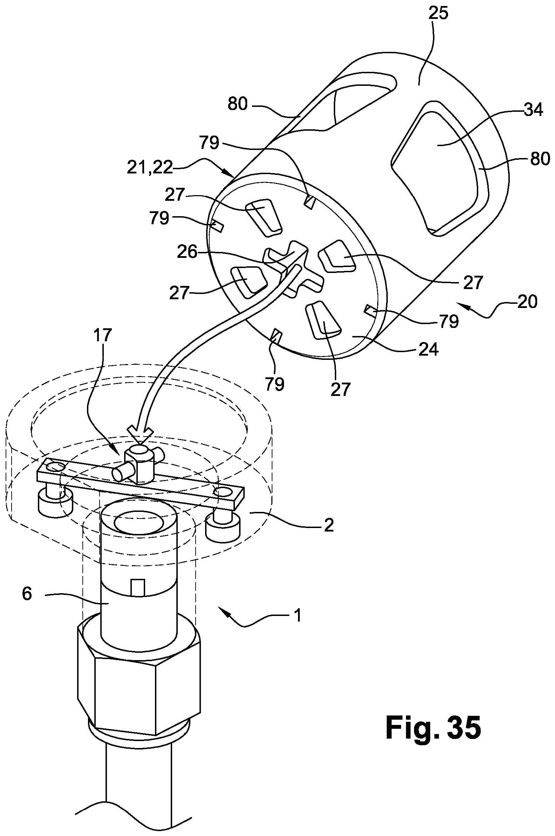

- la figure 35 est une vue en perspective illustrant le montage d'un dispositif selon l'invention sur un organe de couplage d'un appareil d'analyse,
- la figure 36 est une vue de dessous illustrant notamment le dispositif en position fermée,
- la figure 37 est une vue correspondant à la figure 5, illustrant le dispositif dans une position partiellement ouverte,
- la figure 38 est une vue correspondant à la figure 5, illustrant le dispositif dans sa position ouverte,

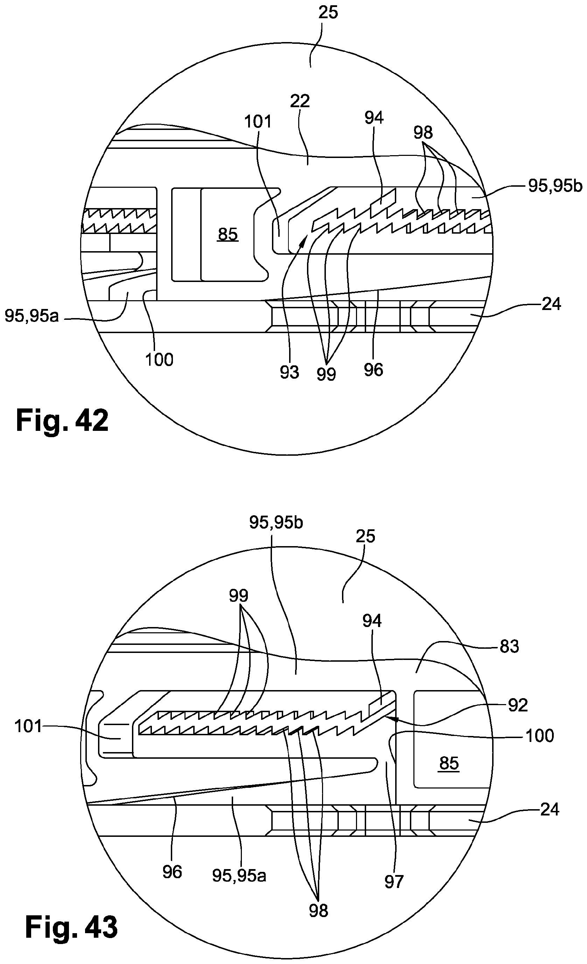

- les figures 39 à 43 sont des vues illustrant les moyens de guidage, dans différentes positions successives, de la position fermée de départ jusqu'à la position fermée finale.

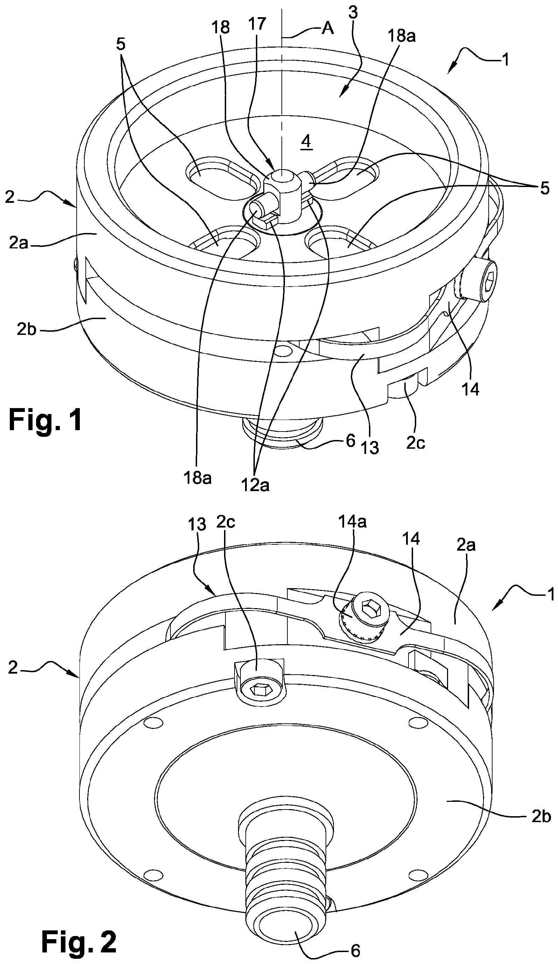

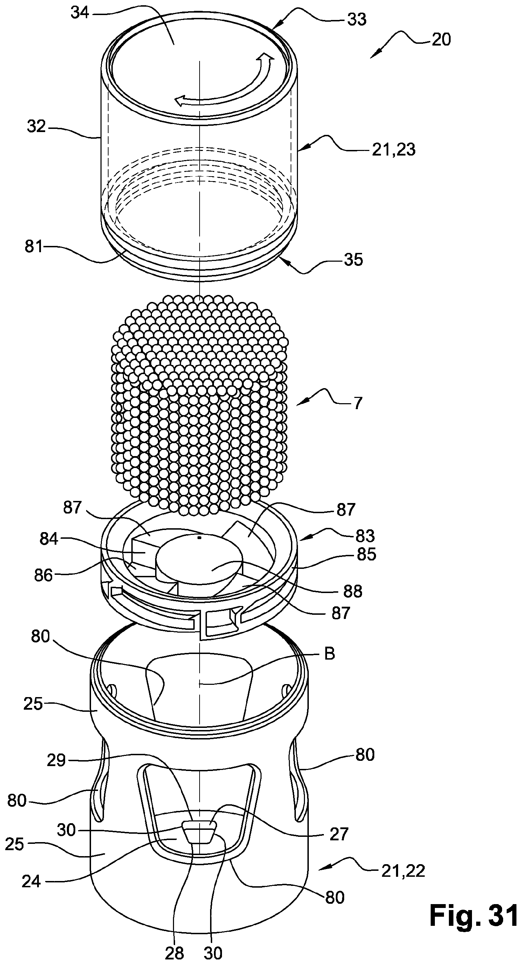

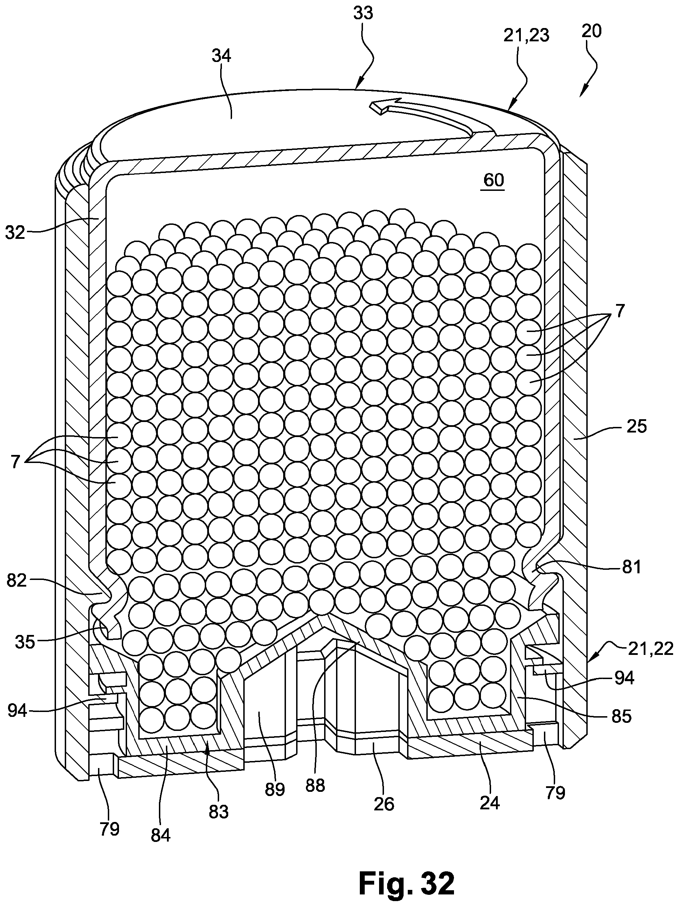

Les figures 1 à 5 représentent un dispositif de collecte 1 d'un appareil d'analyse. Le dispositif de collecte 1 comporte un support cylindrique 2 comportant un logement 3 ouvert vers le dessus. La surface de fond 4 comprend des ouvertures 5, ici au nombre de quatre, régulièrement réparties sur la périphérie. Le dispositif 1 comporte en outre des moyens de collecte 6 aptes à recueillir des billes 7 (figures 31 et 32) traversant lesdites ouvertures 5. Le support est formé d'une première partie 2a et d'une seconde partie 2b assemblées l'une à l'autre, par exemple, par des vis 2c.

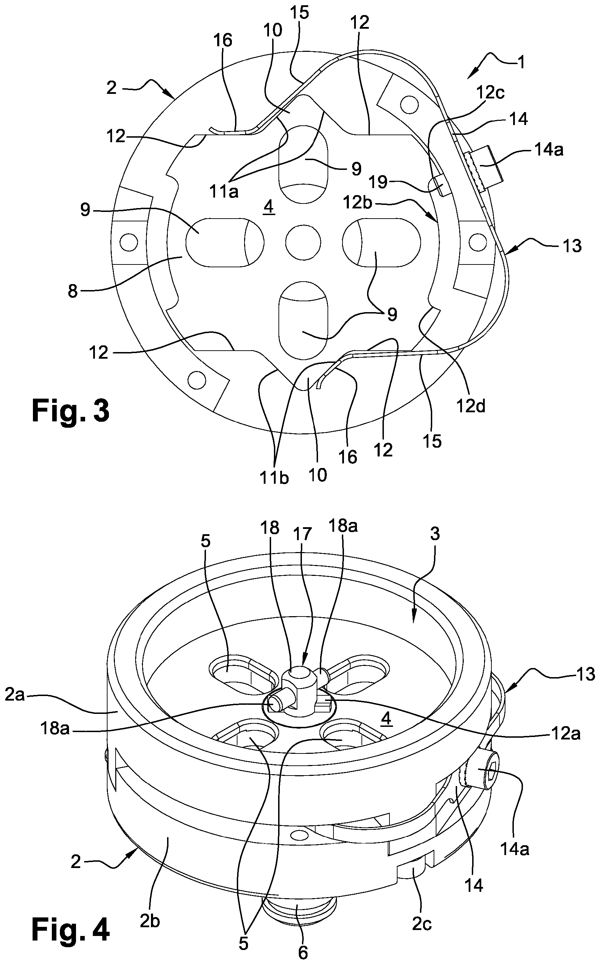

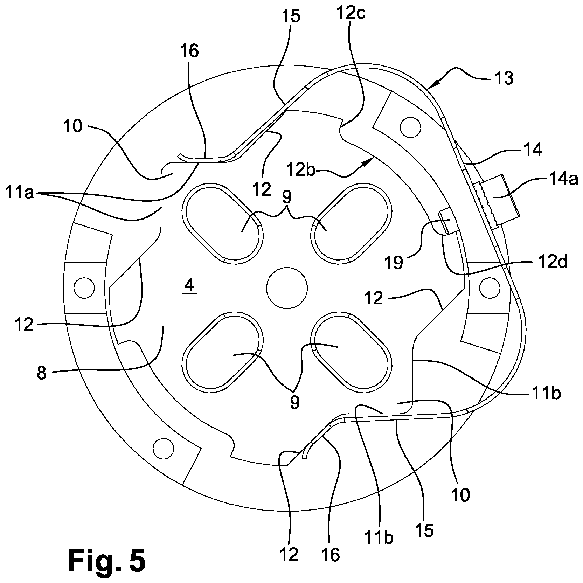

Le dispositif de collecte 1 comporte de plus un organe d'obturation 8 mobile en rotation autour de l'axe du support, entre une position fermée illustrée aux figures 1 à 3 et une position ouverte illustrée aux figures 4 et 5.

L'organe d'obturation 8 est logé axialement entre les première et seconde parties 2a, 2b du support 2. L'organe d'obturation 8 comprend des ouvertures 9, ici au nombre de quatre, régulièrement réparties sur la périphérie. L'organe d'obturation 8 comporte en outre deux zones d'indexation 10 opposées s'étendant radialement vers l'extérieur. Chaque zone d'indexation 10 comporte deux surfaces inclinées 11a, 11b l'une par rapport à l'autre et par rapport à la direction radiale de façon à présenter une forme en V. L'organe d'obturation 8 comporte en outre des zones planes 12 s'étendant de part et d'autre des surfaces inclinées 11a, 11b, ici quatre zones planes. Les zones planes 11a d'une part et les zones planes 11b d'autre part s'étendent respectivement dans un premier plan et un second plan.

L'organe d'obturation 8 comporte également, en son centre, deux saillies 12a s'étendant le long de l'axe A, à l'opposé des moyens de collecte 6. Ces saillies 12a forment des moyens d'entraînement en rotation de l'organe d'obturation 8.

Enfin, l'organe d'obturation 8 comprend au moins une gorge 12b à sa périphérie radialement externe, dont les extrémités circonférentielles 12c, 12d forment des butées.

Le support 2 comporte des moyens d'indexation 13 complémentaires. Lesdits moyens 13 comportent un organe élastique en forme générale de U comprenant une base 14 fixée au support 2, par une vis 14a, et deux branches 15 dont les extrémités 16 viennent en appui sur les surfaces 11a, 11b inclinées des zones d'indexation 10 de l'organe d'obturation 8.

Lesdites extrémités 16 sont recourbées radialement vers l'extérieur de façon à s'adapter à la forme des surfaces inclinées 11a, 11b.

La coopération des moyens d'indexation 13 permet de définir deux positions stables de l'organe d'obturation 8, à savoir la position fermée et la position ouverte.

Le dispositif de collecte 1 comporte en outre un organe de couplage 17 présentant une forme générale de baïonnette. L'organe de couplage 17 comporte un pion 18 d'axe A, fixe par rapport au support 2, et deux doigts 18a diamétralement opposés s'étendant radialement vers l'extérieur depuis le pion 18. Le pion présente un diamètre de 2,5mm et une longueur suivant l'axe A de 10 mm par exemple.

En utilisation, lorsque l'organe d'obturation 8 est en position fermée (figures 1 à 3) les extrémités 16 des branches 15 sont en appui sur les surfaces inclinées 11a, 11b et/ou sur les zones planes 12 de l'organe d'obturation 8.

Lorsque l'organe d'obturation 8 est en position ouverte (figures 4 et 5) les extrémités 16 des branches 15 sont en appui sur les surfaces inclinées 11a, 11b et/ou sur les zones planes 12 de l'organe d'obturation 8.

Les moyens d'indexation 13 permettent d'éviter le déplacement accidentel de l'organe d'obturation 8, par exemple du fait des vibrations.

L'extrémité 19 de la vis 14a forment en outre une butée qui coopère avec les extrémités 12c, 12d de la gorge 12b pour limiter le débattement angulaire de l'organe d'obturation 8 entre ses positions ouverte et fermée.

Dans la position fermée illustrée aux figures 1 et 3, le corps 19 de la vis 14a vient en butée contre l'extrémité 12c de la gorge 12b.

Dans la position ouverte illustrée aux figures 4 et 5, le corps 19 de la vis 14a vient en butée contre l'extrémité 12d de la gorge 12b.

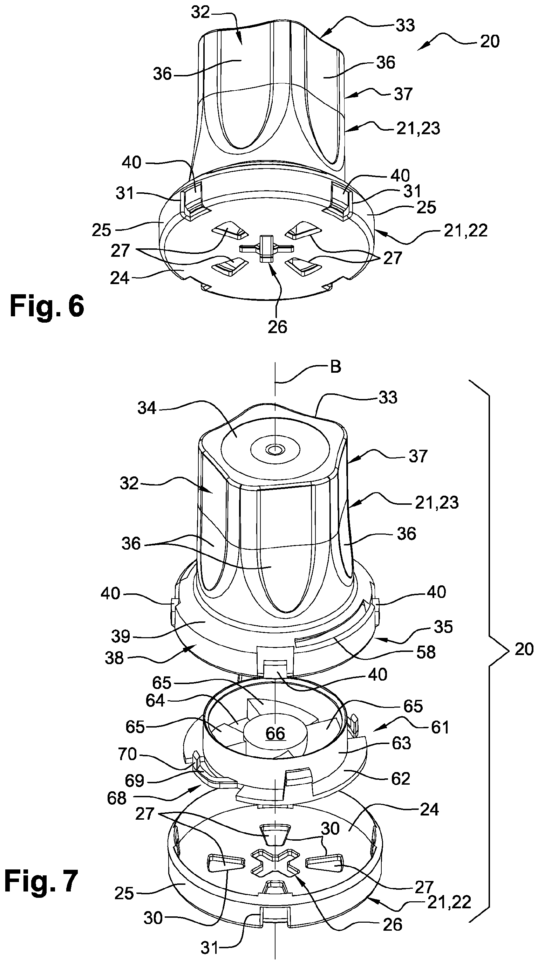

Les figures 6 à 15 représentent un dispositif de conditionnement 20 de billes 7 pour cuvettes de réaction destinées à un appareil d'analyse, selon une première forme de réalisation de l'invention.

Le dispositif 20 comprend un corps 21 comportant une première partie 22 et une seconde partie 23.

La première partie 22 comporte une paroi de fond 24 en forme de disque et une paroi cylindrique 25 s'étendant selon un axe B depuis la périphérie radialement externe de la paroi de fond 24. La première partie 22 forme un couvercle.

La paroi de fond 24 comporte une empreinte centrale 26, en forme générale de croix, par exemple une croix à quatre branches perpendiculaires deux à deux. La paroi de fond 24 comporte en outre quatre ouvertures 27, chaque ouverture 27 présentant une forme de secteur d'anneau. Chaque ouverture 27 comporte un bord radialement interne 28 en arc de cercle, un bord radialement externe 29 en arc de cercle, et deux bords radiaux 30 reliant les bords radialement interne 28 et externe 29.

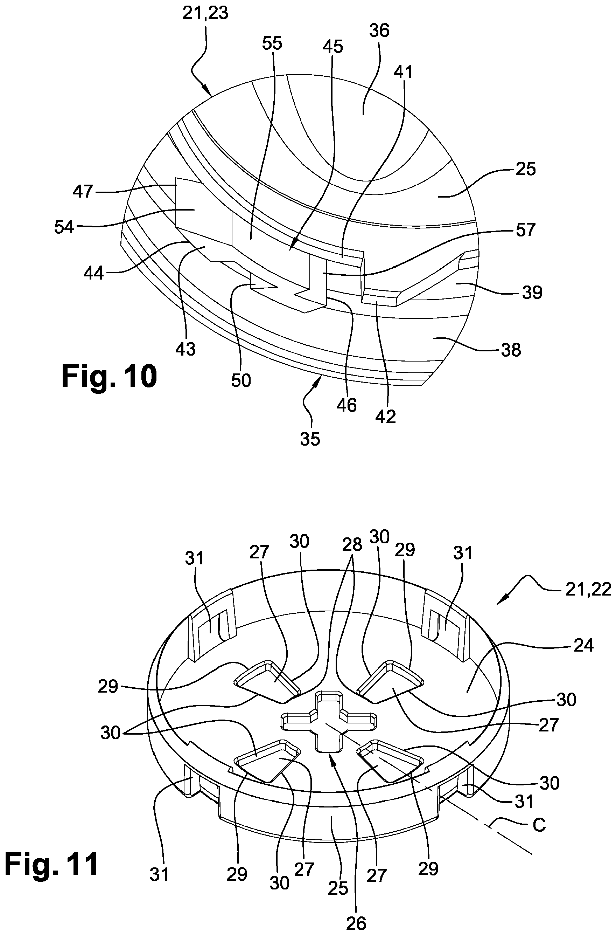

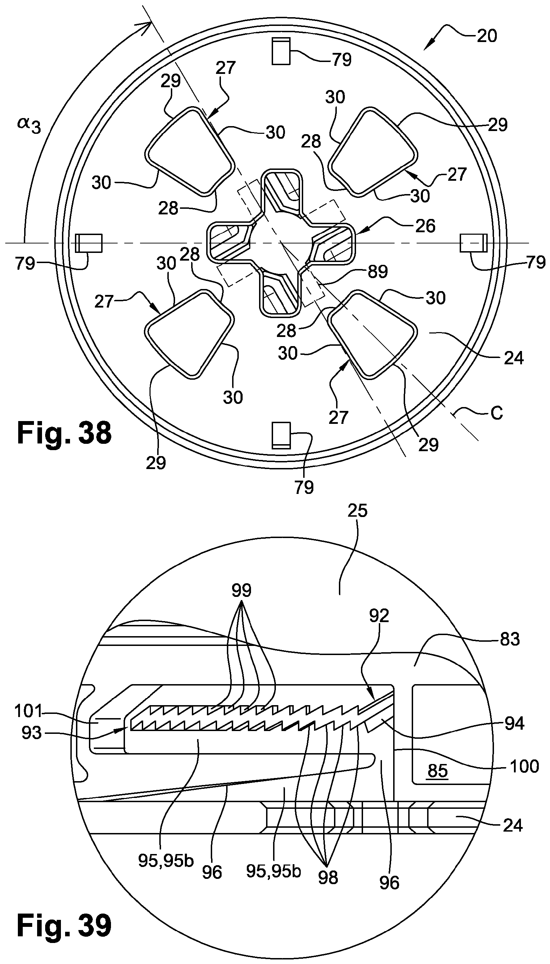

Chaque ouverture 27 s'étend selon un axe médian radial C (figures 11 et 38), décalé angulairement par rapport aux axes des branches, par exemple d'environ 45° dans le cas d'une empreinte 26 à quatre branches.

La paroi cylindrique 25 comporte des lumières 31, ici au nombre de 4, régulièrement réparties sur la circonférence. Chaque lumière 31 comporte une forme générale rectangulaire ou carrée.

La seconde partie 23 comporte une paroi cylindrique 32 d'axe B présentant une première extrémité fermée 33 par une paroi de fond 34, et une seconde extrémité 35 ouverte. La première extrémité 33 est située à l'opposé de la paroi de fond 24 de la première partie 22 du corps 21.

La paroi cylindrique 25 comporte des zones planes ou une forme polygonale 36, par exemple pentagonale, destinées à faciliter la préhension.

La paroi cylindrique 25 comporte une première portion 37 située du côté de la première extrémité 33 et une seconde portion 38 située du côté de la seconde extrémité 35, reliées par une zone de liaison tronconique 39. La seconde portion 38 présente un diamètre supérieur à la dimension de la première portion 37.

La paroi cylindrique 32 de la seconde partie 23, en particulier la seconde portion 38, est montée dans la paroi cylindrique 25 de la première partie 22.

La seconde portion 38 comporte des moyens d'encliquetage 40, par exemple des plots d'encliquetage, destinés à être engagés dans les lumières 31 de la première partie du corps 22, de façon à réaliser la fixation de la première partie 22 et de la seconde partie 23.

L'extrémité axiale de la seconde portion 38, qui est opposée à la paroi de fond, forme un bord d'appui 41.

Deux plots de butée 42 s'étendent axialement depuis le bord d'appui 41, lesdits plots 42 étant diamétralement opposés.

Des moyens de guidage comprennent des organes de guidage 43 s'étendent axialement depuis la zone tronconique 39, en direction de l'extrémité 35. Les organes de guidage 43 sont diamétralement opposés. Chaque organe de guidage 43 comporte une surface radialement externe 44 et une surface radialement interne 45 s'étendant circonférentiellement sur une plage angulaire comprise entre 10 et 90°, par exemple 40°. Lesdites surfaces 44, 45 forment des zones d'encliquetage.

La surface radialement externe 44 comporte successivement, d'une première extrémité circonférentielle 46 vers une seconde extrémité circonférentielle 47 :
- une zone oblique 48 par rapport à la direction radiale, tournée radialement vers l'extérieur,
- une zone en forme d'arc de cercle 49,
- une zone oblique 50 par rapport à la direction radiale, tournée radialement vers l'intérieur,
- une zone en forme d'arc de cercle 51,
- une zone oblique 52 par rapport à la direction radiale, tournée radialement vers l'extérieur, et
- une zone en forme d'arc de cercle 53.

La surface radialement interne 45 comporte successivement, de la seconde extrémité 47 vers la première extrémité 46 :
- une zone oblique 54 par rapport à la direction radiale, tournée radialement vers l'intérieur,
- une zone en forme d'arc de cercle 55,
- une zone oblique 56 par rapport à la direction radiale, tournée radialement vers l'extérieur,
- une zone en forme d'arc de cercle 57.

En variante, les zones obliques 50, 52 et 56 peuvent être remplacées par des zones s'étendant radialement.

La surface radialement externe 44 et la surface radialement interne 45 sont reliées l'une à l'autre, au niveau de la première extrémité 46, par la zone oblique 48 et par la zone en forme d'arc de cercle 57.

La surface radialement externe 44 et la surface radialement interne 45 sont reliées l'une à l'autre, au niveau de la seconde extrémité 47, par la zone en forme d'arc de cercle 53 et par la zone oblique 54.

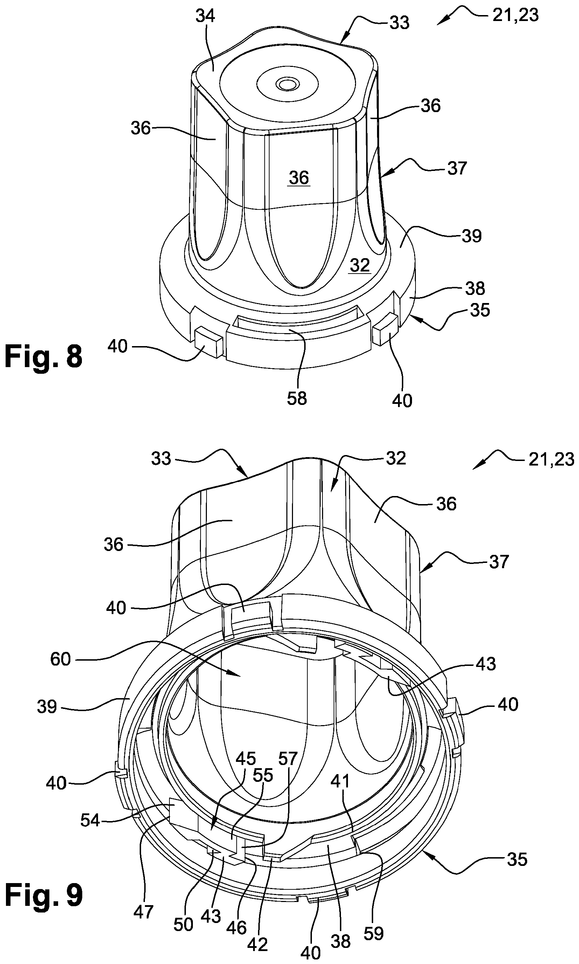

La zone tronconique 39 comporte en outre des lumières 58 en forme d'arc, chaque lumière 58 s'étendant sur une plage angulaire comprise entre 10 et 90°, par exemple 70°. Les lumières 58 sont par exemple au nombre de deux et sont diamétralement opposées. La seconde portion 38 de la paroi cylindrique 32 comporte des gorges 59 (figure 9) en forme d'arc de cercle, chaque gorge 59 s'étendant circonférentiellement le long d'une lumière 58 de la zone tronconique 39.

Un volume interne 60 est délimité entre la paroi cylindrique 32 et la paroi de fond 34 de la seconde partie 23, d'une part, et la paroi de fond 24 de la première partie 22, d'autre part.

Le dispositif 20 comporte en outre un organe d'obturation annulaire 61, d'axe B, monté dans le volume interne 60 précité, du côté de la paroi de fond 24 de la première partie 22. L'organe d'obturation 61 est monté de façon pivotante autour de l'axe B, par rapport au corps 21.

L'organe d'obturation 61 comporte une paroi de fond 62 en forme de disque et une paroi globalement cylindrique 63, s'étendant depuis la paroi de fond 62 et décalée radialement vers l'intérieur par rapport à la périphérie radialement externe de la paroi de fond 62.

La paroi de fond 62 comporte quatre ouvertures 64, chaque ouverture 64 présentant une forme de secteur d'anneau. La paroi de fond 62 comporte en outre quatre surfaces inclinées 65 en forme de portions d'hélice, et une partie conique centrale 66. Chaque surface inclinée 65 comporte une extrémité basse, c'est-à-dire proche de la paroi de fond 24 de la première partie22 du corps 21, l'extrémité basse formant un bord de l'une des ouvertures 64 de l'organe d'obturation 61.

Chaque surface inclinée 65 s'étend par exemple sur une plage angulaire de l'ordre de 65°.

Chaque ouverture 64, 27 de l'organe d'obturation 61 et/ou de la paroi de fond 24 du premier élément 22, s'étend sur une plage angulaire de l'ordre de 25°, par exemple.

L'organe d'obturation 61 est mobile en rotation entre une position ouverte dans laquelle les ouvertures 64 de l'organe d'obturation 61 et les ouvertures 27 du corps 21 sont situées en regard les unes des autres, et une position fermée dans laquelle les ouvertures 64 de l'organe d'obturation 61 sont totalement écartées des ouvertures 27 du corps 21. On définit par ouverture ou fermeture partielle une position de l'organe d'obturation 61 dans laquelle les ouvertures 64 de ce dernier sont situées, pour partie seulement, en regard des ouvertures 27 du corps 21. En d'autres termes :
- en position fermée, les ouvertures 27 du corps 21 sont totalement obturées,
- en position ouverte, les ouvertures 27 du corps 21 sont totalement ouvertes,
- en position partiellement ouverte ou partiellement fermée, une partie de chaque ouverture 27 du corps 21 est obturée et une partie de chaque ouverture 27 du corps 21 est ouverte.

L'organe d'obturation 61 comporte en outre une empreinte 67 de forme similaire à celle de l'empreinte 26 du corps 21, située en regard de ladite empreinte 26 du corps 21 en position fermée de l'organe d'obturation 61 par rapport au corps 21.

L'organe d'obturation 61 comprend également une languette 68 comportant un bras de liaison 69 et une extrémité d'encliquetage 70. La languette 68 est logée dans une encoche 71 de la paroi de fond 61. Le bras de liaison 69 comprend une première partie 72 s'étendant radialement vers l'extérieur depuis la surface cylindrique et une seconde partie 73 s'étendant circonférentiellement depuis la première partie 72. Ladite première partie 72 est inclinée par rapport à la direction radiale, par exemple d'un angle compris entre 30 et 60°. La seconde partie 73 s'étend circonférentiellement sur angle compris entre 10 et 45 °, l'extrémité libre de la seconde partie 73 formant l'extrémité d'encliquetage 70. La languette 68 appartient aux moyens de guidage, l'extrémité d'encliquetage 70 étant apte à coopérer avec la surface radialement externe 44 et la surface radialement interne 45 comme il sera expliqué ci-après.

L'extrémité d'encliquetage 70 comporte une surface radialement interne 74 et une surface radialement externe 75 s'étendant dans la direction circonférentielle et deux surfaces inclinées 76 par rapport à la direction circonférentielle et par rapport à la direction radiale. Lesdites surfaces 76 sont inclinées d'un angle compris entre 30 et 60° par rapport à la direction radiale, par exemple d'un angle de 45°.

L'organe d'obturation 61 comporte de plus des plots d'entretoisement 77 s'étendant radialement vers l'extérieur depuis la surface cylindrique 63. Les plots d'entretoisement 77 sont par exemple au nombre de deux et sont diamétralement opposés.

L'organe d'obturation 61 comporte en outre des moyens d'encliquetage 78, ici des languettes d'encliquetage. Chaque languette d'encliquetage 78 s'étend axialement depuis la périphérie radialement externe de la paroi de fond 62.

Chaque languette d'encliquetage 78 vient s'engager dans une gorge 59 et/ou une lumière 58 de la seconde partie 23 du corps 21, de façon à assurer le montage par encliquetage de l'organe d'obturation 61 par rapport au corps 21, tout en permettant un débattement angulaire de l'organe d'obturation 61 par rapport au corps 21. Lors d'un tel montage, chaque plot d'entretoisement 77 vient en appui sur le bord d'appui 41.

La languette d'encliquetage 68 et l'organe de guidage 43 sont aptes à coopérer ensemble de façon à autoriser la rotation de l'organe d'obturation 61 par rapport au corps 21, uniquement d'une position de départ fermée vers une position ouverte, puis uniquement de la position ouverte vers une position fermée finale.

Les première 22 et seconde parties 23 du corps 21 ainsi que l'organe d'obturation 61 sont par exemple réalisées en matériau synthétique. La seconde partie 22 du corps 21 peut être réalisée en matériau transparent. Ladite seconde partie 22 peut, en variante, être réalisée en verre par exemple.

Le volume interne 60 contient des billes 7 destinées à être disposées dans des cuvettes de réaction pour l'appareil d'analyse. Les billes 7 ont par exemple un diamètre compris entre 1 et 2mm.

En fonctionnement, le dispositif 20 de conditionnement est monté dans une zone de rechargement en billes 7 de l'appareil d'analyse, en particulier, sur le dispositif de collecte 1 de l'appareil d'analyse.

Le dispositif 20 de conditionnement, en position fermée de départ, est monté sur le support 2 et sur l'organe de couplage 17 fixe. Ce dernier pénètre dans l'empreinte 67 de l'organe d'obturation 61, au travers de l'empreinte 26 de la première partie 22 du corps 21, les deux empreintes 26, 67 étant alignées l'une par rapport à l'autre. De même, les ouvertures 64 de l'organe d'obturation 61 et les ouvertures 5 du support 2 sont situées en regard l'une de l'autre.

Par ailleurs, les saillies 12a de l'organe d'obturation 8 sont engagées dans l'empreinte 26 de la première partie 22 du corps 21, de manière à réaliser un couplage en rotation de l'organe d'obturation 8 et du corps 21.

L'opérateur fait ensuite pivoter le corps 21 manuellement. L'organe d'obturation 61 est maintenu fixe par l'organe de couplage 17 fixe et l'organe d'obturation 8 est entraîné en rotation par le corps 21.

Lors de ce pivotement, les ouvertures 27, 64 sont progressivement dégagées ou ouvertes, par alignement partiel ou total des ouvertures 64, 27 de l'organe d'obturation 61 et du corps 21. Lors de cette phase d'ouverture, chaque extrémité d'encliquetage 70 de l'organe d'obturation 61 se déplace le long de la surface radialement externe 44 de l'organe de guidage 43 du corps 21, par déformation élastique du bras de liaison 69 de la languette 68

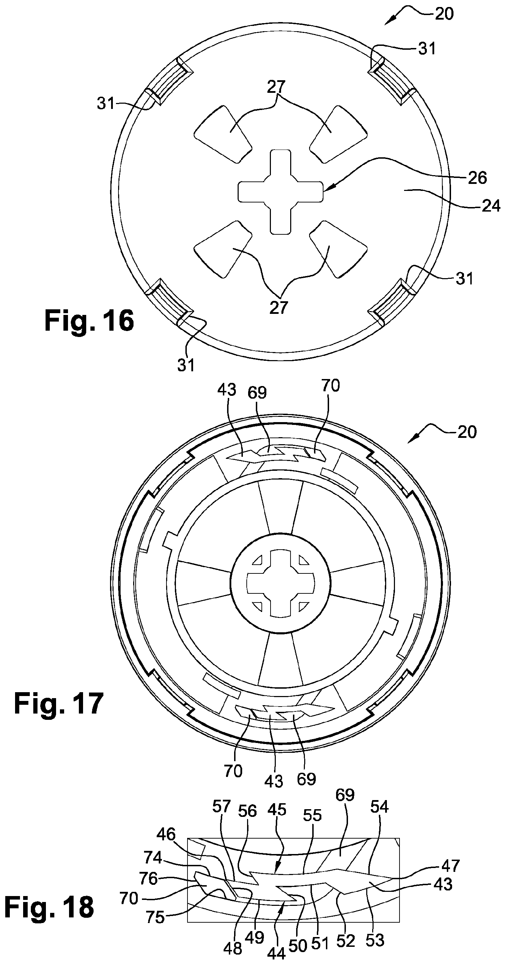

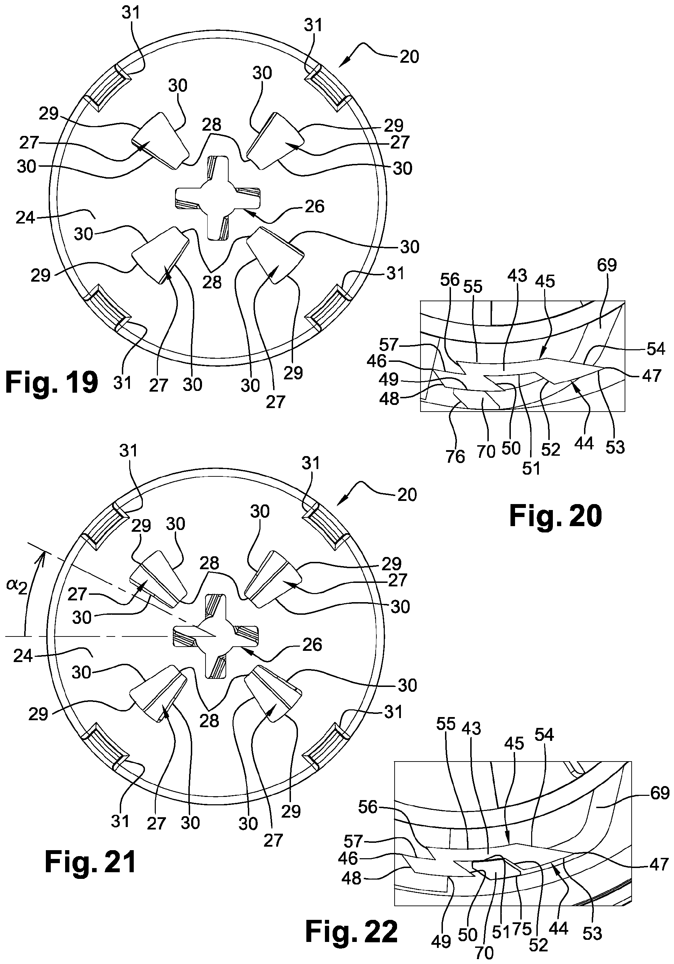

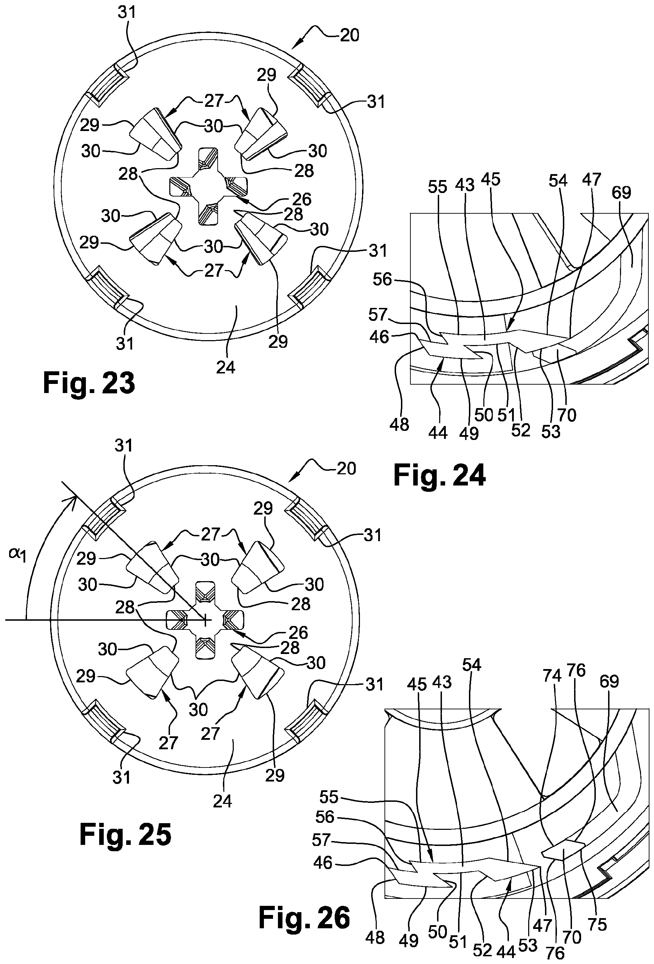

L'extrémité d'encliquetage 70 de la languette 68 se déplace ainsi successivement, de la position fermée de départ vers la position ouverte, le long de :
- la zone oblique 48 (figure 17 et 18),
- la zone en forme d'arc de cercle 49 (figure 20),
- la zone en forme d'arc de cercle 51 (figure 22),
- une zone oblique 52, et
- une zone en forme d'arc de cercle 53 (figure 24).

Dans la position d'ouverture partielle illustrée aux figures 21 et 22, on empêche le retour en position fermée du corps 21 par rapport à l'organe d'obturation 61, par appui de l'extrémité d'encliquetage 70 sur la zone oblique 50.

Ainsi, seul un mouvement d'ouverture est permis, c'est-à-dire un déplacement de l'extrémité d'encliquetage 70 de la première extrémité 46 vers la seconde extrémité 47 de l'organe de guidage 43.

Les figures 25 et 26 illustrent la position complétement ouverte du corps 21 par rapport à l'organe d'obturation 61.

Par ailleurs, lors de l'ouverture du dispositif 20, les empreintes 26, 67 du corps 21 et de l'organe d'obturation 61 ne sont plus alignées l'une par rapport à l'autre, de sorte que le retrait du dispositif 20 hors du support 2 et de l'organe de couplage 17 est empêché.

En position fermée de départ (figures 16 à 18), chaque languette d'encliquetage 70 de l'organe d'obturation 61 vient en butée sur l'extrémité circonférentielle correspondante de la gorge 59 du corps 21.

En position ouverte (figures 25 et 26), chaque languette d'encliquetage 68 de l'organe d'obturation 61 vient en butée sur l'autre extrémité circonférentielle de la gorge 59 du corps 21.

En position ouverte, les ouvertures 64, 27, 5 de l'organe d'obturation 61, du corps 21 et du support 2 sont totalement alignées ou en regard les unes des autres.

Le débattement a1 total autorisé entre les positions ouverte et fermée est par exemple compris entre 15 et 90°, par exemple de l'ordre de 45°.

L'évacuation de billes 7 peut être permise pour une ouverture partielle du dispositif 20, c'est-à-dire dès lors que l'angle de rotation de l'organe d'obturation 61 par rapport au corps 21 est supérieur à une valeur déterminée, par exemple comprise entre 0 et 45°, en particulier 35°. Cette position intermédiaire est illustrée aux figures 21 et 22. On notera qu'à partir de cette position intermédiaire, il n'est plus possible de revenir à la position fermée de départ.

Les billes 7 évacuées sont récupérées et stockées dans la zone de rechargement de l'appareil d'analyse. Les parois inclinées 65 et la partie conique centrale 66 facilitent l'évacuation des billes 7 en les dirigeant par gravité vers les ouvertures 4. Les billes 7 sont ensuite utilisées pour être introduites, de façon automatisée, dans les cuvettes de réaction.

A partir de la position ouverte illustrée aux figures 25 et 26, lorsque l'ensemble des billes 7 a été évacué du volume interne 60 du dispositif 20, l'opérateur peut refermer le dispositif 20 en faisant tourner manuellement le corps 21 dans le sens inverse au sens d'ouverture.

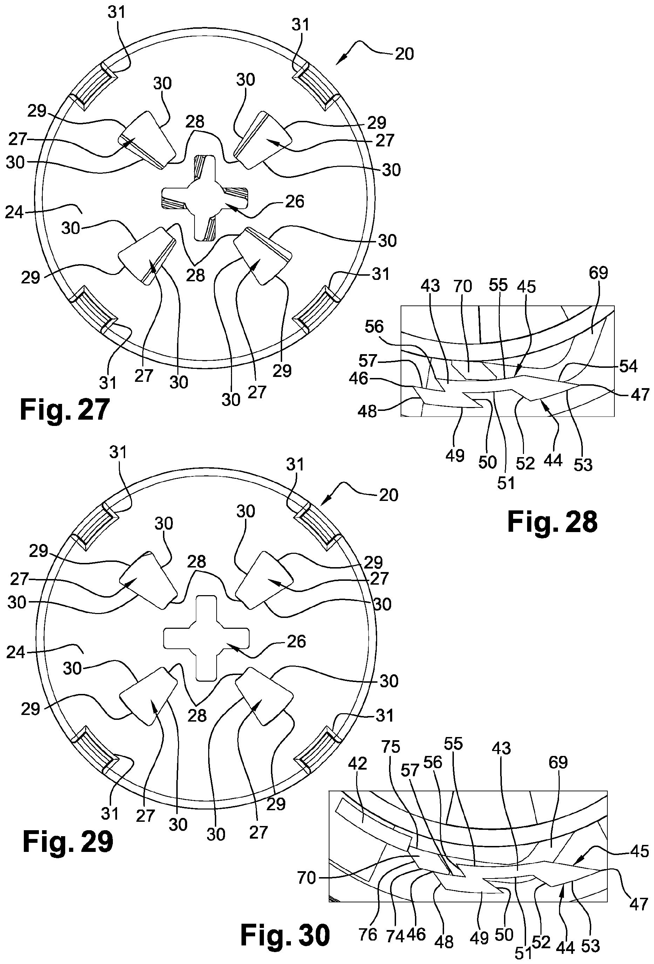

Lors de cette phase de fermeture, du fait de l'inclinaison de la surface 76 de l'extrémité d'encliquetage 70 et de la zone oblique 54 de l'organe de guidage 43, l'extrémité d'encliquetage 70 vient coulisser successivement le long de :
- la zone oblique 54,
- la zone en forme d'arc de cercle 45 (figures 27 et 28), et
- la zone en forme d'arc de cercle 57 (figures 29 et 30).

Les figures 27 et 28 illustrent une position de fermeture partielle et les figures 29 et 30 illustrent une position de fermeture totale ou finale du dispositif de conditionnement 20.

Une fois que la position de fermeture finale est atteinte, il n'est plus possible d'ouvrir à nouveau le dispositif de conditionnement 20 pour une utilisation ultérieure. En effet, le déplacement de l'extrémité d'encliquetage 70 est empêché dans le sens d'ouverture par la zone oblique 56.

On notera par ailleurs qu'en position de fermeture finale, l'extrémité d'encliquetage 70 vient en appui sur le plot de butée 42 de façon à éviter que celle-ci retourne dans sa position fermée de départ.

En d'autres termes, le dispositif 20 est à usage unique. Cette propriété est renforcée par le fait que les moyens d'encliquetage 78complémentaires de la première partie 22 du corps 21 et de la seconde partie 23 du corps 21 empêchent leur démontage.

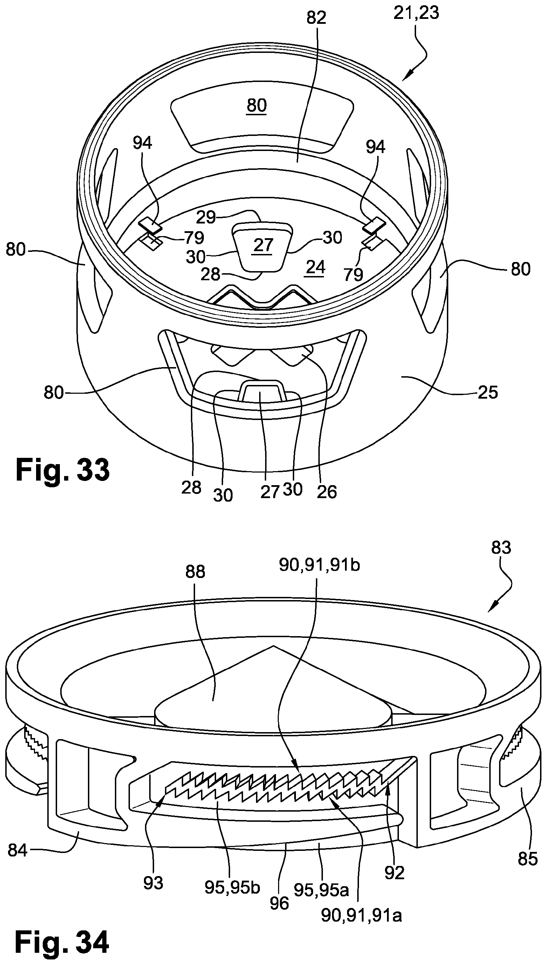

Les figures 31 à 34 représentent un dispositif de conditionnement 20 de billes 7 pour cuvettes de réaction destinées à un appareil d'analyse, selon une seconde forme de réalisation de l'invention.

Les éléments identiques de la première forme de réalisation et de la seconde forme de réalisation sont désignés à l'aide des mêmes références numériques.

Le dispositif 20 comprend un corps 21 comportant une première partie 22 et une seconde partie 23.

La première partie 22 comporte une paroi de fond 24 en forme de disque et une paroi cylindrique 25 s'étendant selon un axe B depuis la périphérie radialement externe de la paroi de fond 24.

La paroi de fond 24 comporte une empreinte centrale 26, en forme générale de croix, par exemple une croix à quatre branches perpendiculaires deux à deux. La paroi de fond 24 comporte en outre quatre ouvertures 27, chaque ouverture 27 présentant une forme de secteur d'anneau. Chaque ouverture 27 comporte un bord radialement interne 28 en arc de cercle, un bord radialement externe 29 en arc de cercle, et deux bords radiaux 30 reliant les bords radialement interne 28 et externe 29.

Chaque ouverture 27 s'étend selon un axe médian radial C (figure 38), décalé angulairement par rapport aux axes des branches, par exemple d'environ 45° dans le cas d'une empreinte 26 à quatre branches.

La paroi de fond 24 comporte en outre des trous 79 de section rectangulaire, ménagés à la périphérie radialement externe de la paroi de fond 24. Ces trous 79 permettent notamment la fabrication de certains éléments de la première partie 22 du corps 21, en particulier lorsque la première partie 22 du corps 21 est obtenue par moulage par injection.

La paroi cylindrique 25 comporte des lumières 80, ici au nombre de 4, régulièrement réparties sur la circonférence. Chaque lumière 80 comporte une forme générale trapézoïdale.

La seconde partie 23 comporte une paroi cylindrique 32 d'axe B présentant une première extrémité fermée 33 par une paroi de fond 34, et une seconde extrémité 35 ouverte. La première extrémité 33 est située à l'opposé de la paroi de fond 24 de la première partie 22 du corps 21.

La paroi cylindrique 32 de la seconde partie 23 est montée dans la paroi cylindrique 25 de la première partie 22.

La paroi cylindrique 32 de la seconde partie 23 comporte, à proximité de sa seconde extrémité 35, des moyens d'encliquetage 81 aptes à coopérer avec des moyens d'encliquetage 82 complémentaires ménagés sur la surface interne de la paroi cylindrique 25 de la première partie 22 du corps 21.

Plus particulièrement, la paroi cylindrique 32 de la seconde partie 23 comporte une gorge annulaire coopérant avec une zone annulaire en saillie formant une section en crochet de la première partie 22.

Les sections de la gorge et de la zone annulaire en saillie sont conçues pour autoriser le montage par encliquetage desdites parties 22, 23 et empêcher le retrait de la seconde partie 23 par rapport à la première partie 22 après encliquetage desdites parties 22, 23.

Un volume interne 60 est délimité entre la paroi cylindrique 32 et la paroi de fond 34 de la seconde partie 23, d'une part, et la paroi de fond 24 et la paroi cylindrique 25 de la première partie 22, d'autre part.

Le dispositif 20 comporte en outre un organe d'obturation annulaire 83, d'axe B, monté dans le volume interne 60 précité, du côté de la paroi de fond 24 de la première partie 22. L'organe d'obturation 83 est monté de façon pivotante autour de l'axe B, par rapport au corps 21.

L'organe d'obturation 83 comporte une paroi de fond 84 en forme de disque et une paroi globalement cylindrique 85, s'étendant depuis la périphérie radialement externe de la paroi de fond 84.

La paroi de fond 84 comporte quatre ouvertures 86 (figure 31), chaque ouverture 86 présentant une forme de secteur d'anneau. La paroi de fond 84 comporte en outre quatre surfaces inclinées en forme de portions d'hélice 87, et une partie conique centrale 88. Chaque portion d'hélice 87 comporte une extrémité basse, c'est-à-dire proche de la paroi de fond 84 de la première partie 22 du corps 21, l'extrémité basse formant un bord de l'une des ouvertures 86 de l'organe d'obturation 83.

Chaque portion d'hélice 87 s'étend par exemple sur une plage angulaire de l'ordre de 65°.

Chaque ouverture 86, 27 de l'organe d'obturation 83 et/ou de la paroi de fond 24 de la première partie 22, s'étend sur une plage angulaire de l'ordre de 25°, par exemple.

L'organe d'obturation 83 est mobile en rotation entre une position ouverte dans laquelle les ouvertures 86 de l'organe d'obturation 83 et les ouvertures 27 du corps 21 sont situées en regard les unes des autres, et une position fermée dans laquelle les ouvertures 86 de l'organe d'obturation 83 sont totalement écartées des ouvertures 27 du corps 21. On définit par ouverture ou fermeture partielle une position de l'organe d'obturation 83 dans laquelle les ouvertures 86 de ce dernier sont situées, pour partie seulement, en regard des ouvertures 27 du corps 21. En d'autres termes :
- en position fermée, les ouvertures 27 du corps 21 sont totalement obturées,
- en position ouverte, les ouvertures 27 du corps 21 sont totalement ouvertes,
- en position partiellement ouverte ou partiellement fermée, une partie de chaque ouverture 27 du corps 21 est obturée et une partie de chaque ouverture 27 du corps 21 est ouverte.

L'organe d'obturation 83 comporte en outre une empreinte 89 de forme similaire à celle de l'empreinte 26 du corps 21, située en regard de ladite empreinte 26 du corps 21 en position fermée de l'organe d'obturation 83 par rapport au corps 21.

L'organe d'obturation 83 et la première partie 22 du corps 21 comportent des moyens de guidage 90 autorisant la rotation de l'organe d'obturation 83 par rapport au corps 21, uniquement d'une position de départ fermée vers une position ouverte, puis uniquement de la position ouverte vers une position fermée finale.

Pour cela, l'organe d'obturation 83 comprend au moins un organe de guidage 91 ou une partie dentée 91 s'étendant dans un plan radial, ici quatre parties dentées 91 régulièrement réparties sur la circonférence. Chaque partie dentée 91 comporte une première extrémité 92 et une seconde extrémité 93. Chaque partie dentée 91 comporte une première zone dentée 91a tournée vers la paroi de fond 24 de la première partie 22, et une seconde zone dentée 91b, opposée à la première zone dentée 91a. Chaque partie dentée 91 est apte à coopérer avec une languette élastique 94 s'étendant radialement vers l'intérieur depuis la paroi cylindrique 25 de la première partie 22 du corps 21.

L'organe d'obturation 83 comporte des canaux 95 destinés à l'introduction et au logement des languettes élastiques 94, chaque canal 95 comportant une première partie 95a et une seconde partie 95b. La première partie 95a est délimitée par une surface inclinée 96 par rapport au plan radial, la languette 94 étant guidée par ladite surface inclinée 96 lors de son introduction dans le canal 95. La seconde partie 95b présente, en vue de face, une forme générale en C entourant la partie dentée 91 correspondante.

La première partie 95a et la seconde partie 95b du canal 95 sont reliées par une zone de liaison 97 située en regard de la première extrémité 92 de la partie dentée 91.

Chaque zone dentée 91 s'étend globalement dans un plan radial, chaque dent de la zone dentée 91 comportant une surface inclinée 98 par rapport au plan radial correspondant et une surface de butée 99 s'étendant globalement perpendiculairement au plan radial.

Par ailleurs, chaque languette 94 est orientée dans un plan incliné par rapport au plan radial, l'orientation de la languette 94 étant similaire à celle des surfaces inclinées 99 des dents.

Les première 22 et seconde parties 23 du corps 21 ainsi que l'organe d'obturation 83 sont par exemple réalisées en matériau synthétique. La seconde partie 23 du corps 21 peut être réalisée en matériau transparent. Ladite seconde partie 22 peut, en variante, être réalisée en verre par exemple.

Le volume interne 60 contient des billes 7 destinées à être disposées dans des cuvettes de réaction pour l'appareil d'analyse.

En fonctionnement, le dispositif 20 est monté dans un dispositif de collecte 1 de billes 7 de l'appareil d'analyse. En particulier, l'appareil d'analyse comporte un organe de couplage 17 et un support 2 comprenant des moyens de collecte 6 aptes à recueillir les billes 7 logées dans le dispositif 20.

Le dispositif 20, en position fermée de départ, est monté sur le support 2 et sur l'organe de couplage 17. Ce dernier pénètre dans l'empreinte 89 de l'organe d'obturation 83, au travers de l'empreinte 26 de la première partie 22 du corps 21, les deux empreintes 26, 89 étant alignées l'une par rapport à l'autre.

L'opérateur fait ensuite pivoter le corps 21 manuellement. L'organe d'obturation 83, qui est couplé en rotation à l'organe de couplage 17 fixe, pivote ainsi relativement par rapport au corps 21.

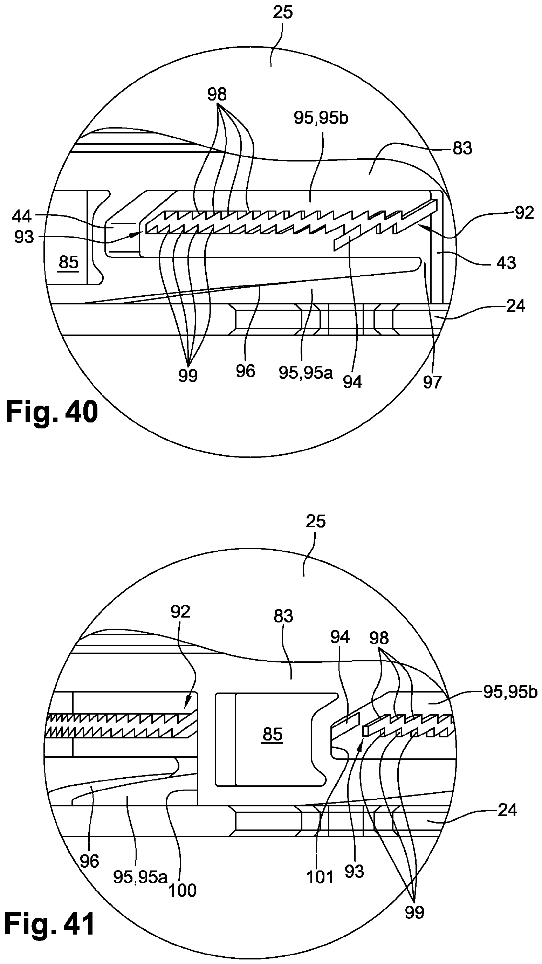

Lors de ce pivotement, les ouvertures 27, 86 sont progressivement dégagées ou ouvertes, par alignement partiel ou total des ouvertures 86, 27 de l'organe d'obturation 83 et du corps 21. Lors de cette phase d'ouverture, chaque languette 94 du corps 21 se déplace le long de la première zone dentée 91a, par déformation élastique de la languette 94, de la première extrémité 92 (position fermée de départ illustrée à la figure 39), jusqu'à la seconde extrémité 93 (position ouverte illustrée à la figure 41). La figure 40 représente une position intermédiaire, à savoir une position d'ouverture partielle. Comme indiqué précédemment, lors de cette phase d'ouverture, seul un mouvement d'ouverture est permis par la forme des dents et des languettes 94, c'est-à-dire un déplacement de la languette 94 de la première extrémité 92 vers la seconde extrémité 93 de la première zone dentée 91a.

Par ailleurs, lors de l'ouverture du dispositif 20, les empreintes 26, 89 du corps 21 et de l'organe d'obturation 83 ne sont plus alignées l'une par rapport à l'autre, de sorte que le retrait du dispositif 20 hors du support 2 et de l'organe de couplage 17 est empêché.

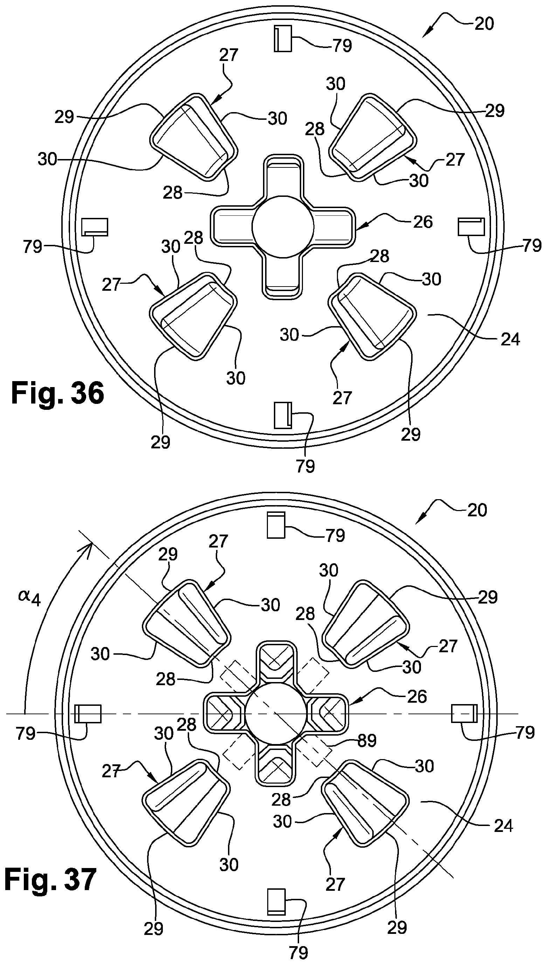

En position fermée de départ (figures 36 et 39), la languette 94 est en appui sur une première surface de butée 100 formant une extrémité circonférentielle de la seconde partie 95b du canal 95. En position ouverte (figures 38 et 41), la languette 94 est en appui sur une seconde surface de butée 101 formant une extrémité circonférentielle de la seconde partie 95b du canal 95, opposée à la première surface de butée 100.

En position ouverte, les ouvertures 89, 26 de l'organe d'obturation 83 et du corps 21 sont totalement alignées ou en regard l'une de l'autre.

Le débattement a3 (figure 38) total autorisé entre les position ouverte et fermée est par exemple compris entre 45 et 90°, par exemple de l'ordre de 60°.

L'évacuation de billes 7 peut être permise pour une ouverture partielle du dispositif 20, c'est-à-dire dès lors que l'angle de rotation a' (figure 37) de l'organe d'obturation 83 par rapport au corps 21 est supérieur à une valeur déterminée, par exemple comprise entre 40 et 50°, en particulier 43°. Cette position intermédiaire est illustrée à la figure 37. Les billes 7 évacuées sont récupérées et stockées dans le dispositif de collecte 1 de l'appareil d'analyse. Les portions 87 d'hélice et la partie conique centrale 88 facilitent l'évacuation des billes 7 en les dirigeant par gravité vers les ouvertures 86, 28. Les billes 7 sont ensuite utilisées pour être introduites, de façon automatisée, dans les cuvettes de réaction.

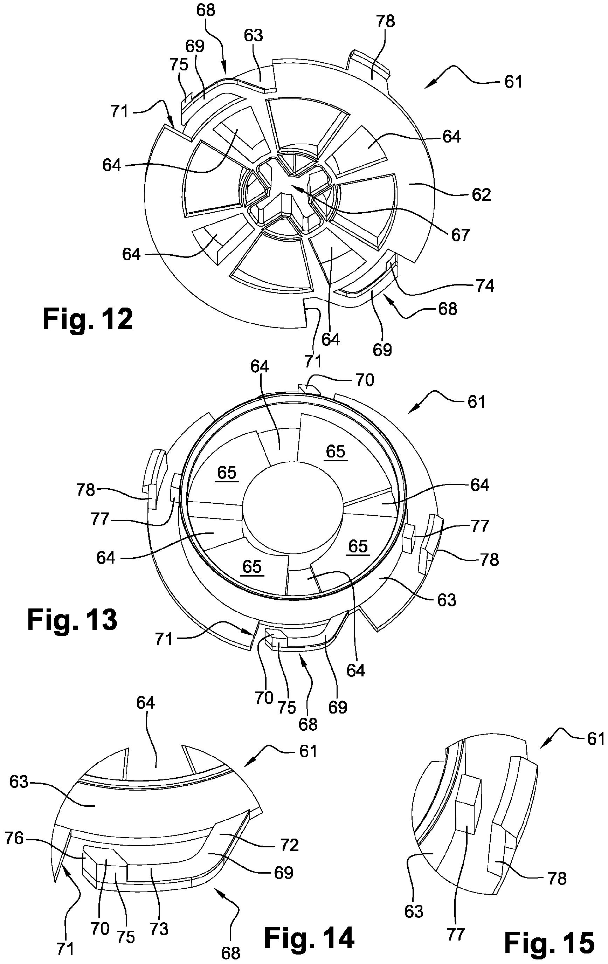

A partir de la position ouverte illustrée aux figures 8 et 11, lorsque l'ensemble des billes 7 a été évacué du volume interne 60 du dispositif 20, l'opérateur peut refermer le dispositif 20 en faisant tourner manuellement le corps 21 dans le sens inverse au sens d'ouverture. Lors de cette phase de fermeture, du fait de l'inclinaison de la languette 94 et de la surface inclinée 98 de la dent d'extrémité, située au niveau de la seconde extrémité 93, la languette 94 vient coulisser le long des surfaces inclinées 98 des dents de la seconde zone dentée 91b, par déformation élastique de la languette 94, de la seconde extrémité 93 vers la première extrémité 92. La figure 12 illustre une position de fermeture partielle et la figure 13 illustre une position de fermeture totale ou finale du dispositif 20.

Comme indiqué précédemment, lors de cette phase de fermeture, seul un mouvement de fermeture est permis par la forme des dents et des languettes 94, c'est-à-dire un déplacement de la languette 94de la seconde extrémité 93 vers la première extrémité 92 de la seconde zone dentée 91b.

Ainsi, une fois que la position de fermeture finale est atteinte, il n'est plus possible d'ouvrir à nouveau le dispositif 20, pour une utilisation ultérieure. En d'autres termes, le dispositif 20 est à usage unique. Cette propriété est renforcée par le fait que les moyens d'encliquetage 81, 82 complémentaires de la première partie 22 et de la seconde partie 23 du corps 21 empêchent leur démontage.

Quelle que soit la forme de réalisation envisagée, le dispositif de conditionnement de billes selon l'invention est de préférence à usage unique et permet de sécuriser l'alimentation en billes d'un automate d'analyse et donc de sécuriser le processus d'analyse en évitant que des billes possédant d'autres caractéristiques physiques que celles préconisées pour les tests ne soient utilisées, ce qui aurait pour effet de fausser l'interprétation des résultats obtenus.

## Revendications

1. Dispositif (20) de conditionnement de billes (7) pour cuvettes de réaction destinées à un appareil d'analyse, comportant :
- un corps (21) comprenant au moins une ouverture (27), ledit corps (21) étant destiné à loger des billes (7),
- un organe d'obturation (61 ; 83), mobile en rotation par rapport au corps (21) entre une position fermée dans laquelle l'organe d'obturation (61 ; 83) ferme l'ouverture (27) du corps (21), et une position ouverte dans laquelle l'ouverture (27) du corps (21) est ouverte de manière à permettre l'évacuation de billes (7) hors du corps (21), le corps (21) comporte une empreinte (26) destinée au passage d'un organe de couplage (17) en rotation, **caractérisé en ce que** l'organe d'obturation (61 ; 83) comporte une empreinte (67 ; 89) apte à coopérer avec l'organe de couplage (17), l'empreinte (67 ; 89) de l'organe d'obturation (61 ; 83) étant située en regard de l'empreinte (26) du corps (21) dans la position fermée, de façon à ce que l'organe de couplage (17) peut être introduit au travers de l'empreinte (26) du corps (21) jusqu'à venir se loger dans l'empreinte (67 ; 89) de l'organe d'obturation (61 ; 83), par coopération de forme entre l'organe de couplage (17) et l'empreinte (67 ; 89) de l'organe d'obturation (61 ; 83), l'empreinte (67 ; 89) de l'organe d'obturation (61 ; 83) étant écartée angulairement de l'empreinte (26) du corps (21) dans la position ouverte, de façon à ce que l'empreinte (26) du corps (21) ne permet plus le retrait de l'organe de couplage (17).

2. Dispositif (20) selon la revendication 1, dans lequel le corps (21) comporte une première partie (22) et une seconde partie (23) montée sur la première partie (22) ou dans la première partie (22), lesdites première et seconde parties (22, 23) délimitant un logement (60) pour les billes (7), l'organe d'obturation (61 ; 83) étant monté dans ledit logement (60).

3. Dispositif (20) selon la revendication 2, dans lequel la seconde partie (23) est fixée à la première partie (22) par des moyens d'encliquetage (40 ; 81, 82), lesdits moyens d'encliquetage (40 ; 81, 82) étant conçus pour autoriser le montage par encliquetage desdites parties (22, 23) et empêcher le retrait de la seconde partie (22) par rapport à la première partie (23) après encliquetage desdites parties (22, 23).

4. Dispositif (20) selon l'une des revendications 1 à 3, dans lequel l'organe d'obturation (83) et le corps (21) comportent des moyens de guidage (43 ; 90) permettant d'autoriser la rotation de l'organe d'obturation (83) par rapport au corps (21), uniquement d'une position de départ fermée vers une position ouverte, puis uniquement de la position ouverte vers une position fermée finale.

5. Dispositif (20) selon la revendication 4, dans lequel les moyens de guidage (43, 68 ; 90) comprennent une première zone d'encliquetage (44 ; 91a) et une seconde zone d'encliquetage (45 ; 91b) opposées, lesdites zones d'encliquetage étant par exemple crantées ou dentées, lesdits moyens de guidage (43, 68 ; 90) comportant en outre une languette élastique (68 ; 94) coopérant avec la première zone d'encliquetage (44 ; 91a) lors de la rotation de l'organe d'obturation (61 ; 83) par rapport au corps (21), de sa position de départ fermée vers sa position ouverte, la languette élastique (68 ; 94) coopérant avec la seconde zone d'encliquetage (45 ; 91b) lors de la rotation de l'organe d'obturation (61 ; 83) par rapport au corps (21), de sa position ouverte vers sa position fermée finale, les zones d'encliquetage (44 ; 91a, 45; 91b) appartenant à l'organe d'obturation (61 ; 83), la languette élastique (68 ; 94) appartenant au corps (21), ou inversement.

6. Dispositif (20) selon la revendication 5, **caractérisé en ce que** chaque zone d'encliquetage (44; 91a, 45; 91b) s'étend circonférentiellement en arc de cercle.

7. Dispositif (1) selon la revendication 5, **caractérisé en ce que** chaque zone d'encliquetage est dentée (91a, 91b) et s'étend globalement dans un plan radial, chaque dent de la zone dentée comportant une surface inclinée (98) par rapport au plan radial correspondant et une surface de butée (99) s'étendant globalement perpendiculairement au plan radial.

8. Dispositif (20) selon l'une des revendications 4 à 7, dans lequel les moyens de guidage (90) comprennent des moyens de butée (100, 101) aptes à limiter la rotation de l'organe d'obturation entre ses positions ouverte et fermée.

9. Dispositif (20) selon l'une des revendications 1 à 8, dans lequel l'organe d'obturation (61 ;83) comprend au moins une portion d'hélice ou surface inclinée (65 ; 87) inclinée en direction d'au moins une ouverture (86) de l'organe d'obturation (61 ; 83).

10. Ensemble comportant un dispositif de conditionnement (20) selon l'une des revendications 1 à 9, et un dispositif de collecte (1), le dispositif de collecte comprenant :
- un support (2), ledit support (2) comprenant au moins une ouverture (5) et des moyens de collecte (6), ladite ouverture (5) étant destinée à être située en regard de l'ouverture du corps du dispositif de conditionnement (20),
- un organe d'obturation (8) mobile par rapport au support (2) entre une position fermée dans laquelle l'organe d'obturation (8) ferme l'ouverture (5) du support (2), et une position ouverte dans laquelle l'ouverture (5) du support (2) est ouverte,
- un organe de couplage (18a) destiné à coopérer avec l'organe d'obturation (67) du dispositif de conditionnement (20), l'organe d'obturation (8) étant mobile en rotation par rapport à l'organe de couplage (18a) du dispositif de collecte (1), de sorte qu'en position ouverte de l'organe d'obturation (8) et de l'organe de couplage (12a) du dispositif de collecte, les billes issues du dispositif de conditionnement (20) traversent les ouvertures de l'organe d'obturation et du corps du dispositif de conditionnement puis l'ouverture du support du dispositif de collecte avant d'être acheminées vers les moyens de collecte.

11. Ensemble selon la revendication 10, **caractérisé en ce qu'**il comporte des moyens d'indexation (13) aptes à maintenir l'organe d'obturation du dispositif de collecte respectivement en position ouverte et en position fermée.

## Patentansprüche

1. Vorrichtung (20) zum Abpacken von Kugeln (7) für Reaktionsküvetten, die für ein Analysegerät bestimmt sind, enthaltend:
- einen Körper (21) mit mindestens einer Öffnung (27), wobei der Körper (21) dazu bestimmt ist, Kugeln (7) aufzunehmen,
- ein Verschlussorgan (61; 83), das in Bezug auf den Körper (21) zwischen einer geschlossenen Stellung, in der das Verschlussorgan (61; 83) die Öffnung (27) des Körpers (21) verschließt, und einer offenen Stellung, in der die Öffnung (27) des Körpers (21) offen ist, um das Ausleiten von Kugeln (7) aus dem Körper (21) heraus zu ermöglichen, drehbeweglich ist, wobei der Körper (21) eine Vertiefung (26) aufweist, die für den Durchgang eines drehbeweglichen Kopplungsorgans (17) bestimmt ist,
**dadurch gekennzeichnet, dass**
das Verschlussorgan (61; 83) eine Vertiefung (67; 89) aufweist, die mit dem Kopplungsorgan (17) zusammenwirken kann, wobei in der geschlossenen Stellung die Vertiefung (67; 89) des Verschlussorgans (61; 83) der Vertiefung (26) des Körpers (21) gegenüberliegt, so dass das Kopplungsorgan (17) durch die Vertiefung (26) des Körpers hindurch soweit eingeführt werden kann, dass es in der Vertiefung (67; 89) des Verschlussorgans (61; 83) aufgenommen wird, und zwar durch Formschluss zwischen dem Kopplungsorgan (17) und der Vertiefung (67; 89) des Verschlussorgans (61; 83), wobei die Vertiefung (67; 89) des Verschlussorgans (61; 83) in der offenen Stellung winkelmäßig von der Vertiefung (26) des Körpers (21) beabstandet ist, so dass die Vertiefung (26) des Körpers (21) das Entfernen des Kopplungsorgans (17) nicht mehr gestattet.

2. Vorrichtung (20) nach Anspruch 1,
wobei der Körper (21) einen ersten Abschnitt (22) und einen zweiten Abschnitt (23) enthält, der auf dem ersten Abschnitt (22) oder in dem ersten Abschnitt (22) angebracht ist, wobei der erste und der zweite Abschnitt (22, 23) eine Aufnahme (60) für die Kugeln (7) begrenzen, wobei das Verschlussorgan (61; 83) in der Aufnahme (60) gelagert ist.

3. Vorrichtung (20) nach Anspruch 2,
wobei der zweite Abschnitt (23) über Einrastmittel (40; 81, 82) an den ersten Abschnitt (22) befestigt ist, wobei die Einrastmittel (40; 81, 82) so ausgelegt sind, dass sie das Anbringen der Abschnitte (22, 23) durch Einrasten zulassen und das Entfernen des zweiten Abschnitts (22) vom ersten Abschnitt (23) nach dem Einrasten der Abschnitte (22, 23) verhindern.

4. Vorrichtung (20) nach einem der Ansprüche 1 bis 3,
wobei das Verschlussorgan (83) und der Körper (21) Führungsmittel (43; 90) aufweisen, die es ermöglichen, die Drehung des Verschlussorgans (83) in Bezug auf den Körper (21) nur von einer geschlossenen Ausgangsstellung in eine offene Stellung und dann nur von der offenen Stellung in eine geschlossene Endstellung zuzulassen.

5. Vorrichtung (20) nach Anspruch 4,
wobei die Führungsmittel (43, 68; 90) einen ersten Einrastbereich (44; 91a) und einen zweiten Einrastbereich (45; 91b) aufweisen, die einander gegenüberliegen, wobei die Einrastbereiche beispielsweise gerippt oder verzahnt sind, wobei die Führungsmittel (43, 68; 90) ferner eine elastische Zunge (68; 94) aufweisen, die bei Drehung des Verschlussorgans (61; 83) in Bezug auf den Körper (21) aus seiner geschlossenen Ausgangsstellung in seine offene Stellung mit dem ersten Einrastbereich (44; 91a) zusammenwirkt, wobei die elastische Zunge (68; 94) bei Drehung des Verschlussorgans (61; 83) in Bezug auf den Körper (21) aus seiner offenen Stellung in seine geschlossene Endstellung mit dem zweiten Einrastbereich (45; 91b) zusammenwirkt, wobei die Einrastbereiche (44; 91a, 45; 91b) zum Verschlussorgan (61; 83) gehören, die elastische Zunge (68; 94) zum Körper (21) gehört, oder umgekehrt.

6. Vorrichtung (20) nach Anspruch 5,
**dadurch gekennzeichnet, dass** jeder Einrastbereich (44; 91a, 45; 91b) sich in Umfangsrichtung kreisbogenförmig erstreckt.

7. Vorrichtung (1) nach Anspruch 5,
**dadurch gekennzeichnet, dass** jeder Einrastbereich gezahnt ist (91a, 91b) und sich insgesamt in einer radialen Ebene erstreckt, wobei jeder Zahn des gezahnten Bereichs eine bezüglich der entsprechenden radialen Ebene geneigte Fläche (98) und eine Anschlagfläche (99) aufweist, die sich insgesamt senkrecht zur radialen Ebene erstreckt.

8. Vorrichtung (20) nach einem der Ansprüche 4 bis 7,
wobei die Führungsmittel (90) Anschlagmittel (100, 101) aufweisen, die geeignet sind, die Drehung des Verschlussorgans zwischen seiner offenen und seiner geschlossenen Stellung zu begrenzen.

9. Vorrichtung (20) nach einem der Ansprüche 1 bis 8,
wobei das Verschlussorgan (61; 83) mindestens einen Helixabschnitt oder eine geneigte Fläche (65; 87) umfasst, der bzw. die in Richtung mindestens einer Öffnung (86) des Verschlussorgans (61; 83) geneigt ist.

10. Anordnung mit einer Abpackvorrichtung (20) nach einem der Ansprüche 1 bis 9 und einer Sammelvorrichtung (1), wobei die Sammelvorrichtung aufweist:
- einen Träger (2), wobei der Träger (2) mindestens eine Öffnung (5) und Sammelmittel (6) aufweist, wobei die Öffnung (5) dazu bestimmt ist, der Öffnung des Körpers der Abpackvorrichtung (20) gegenüberzuliegen,
- ein Verschlussorgan (8), das in Bezug auf den Träger (2) zwischen einer geschlossenen Stellung, in der das Verschlussorgan (8) die Öffnung (5) des Trägers (2) verschließt, und einer offenen Stellung, in der die Öffnung (5) des Trägers (2) offen ist, beweglich ist,
- ein Kopplungsorgan (18a), das dazu bestimmt ist, mit dem Verschlussorgan (67) der Abpackvorrichtung (20) zusammenzuwirken, wobei das Verschlussorgan (8) in Bezug auf das Kopplungsorgan (18a) der Sammelvorrichtung (1) drehbeweglich ist, so dass in der offenen Stellung des Verschlussorgans (8) und des Kopplungsorgans (12a) der Sammelvorrichtung die aus der Abpackvorrichtung (20) stammenden Kugeln durch die Öffnungen des Verschlussorgans und des Körpers der Abpackvorrichtung und dann durch die Öffnung des Trägers der Sammelvorrichtung treten, bevor sie den Sammelmitteln zugeführt werden.

11. Anordnung nach Anspruch 10,
**dadurch gekennzeichnet, dass** sie Indexierungsmittel (13) aufweist, die geeignet sind, das Verschlussorgan der Sammelvorrichtung in der offenen bzw. in der geschlossenen Stellung zu halten.

## Claims

1. A device (20) for packaging balls (7) for reaction vessels for an analysis appliance, comprising:
- a body (21) comprising at least one opening (27), said body (21) being used to house balls (7),
- a closing member (61 ; 83), that can be moved relative to the body (21) between a closed position in which the closing member (61 ; 83) closes the opening (27) of the body (21), and an open position in which the opening (27) of the body (21) is open so as to allow the balls (7) to be dispensed from the body (21), the body (21) has an indentation (26) for the passage of a rotating coupling member (17), **characterised in that** the closing member (61 ; 83) has an indentation (67 ; 89) capable of cooperating with the coupling member (17), the indentation (67 ; 89) of the closing member (61 ; 83) being located opposite the indentation (26) of the body (21) in the closed position, so that the coupling member (17) can be inserted through the indentation (26) of the body (21) until it fits into the indentation (67 ; 89) in the closing member (61 ; 83), by form-fitting between the coupling member (17) and the indentation (67 ; 89) of the closing member (61 ; 83), the indentation (67 ; 89) of the closing member (61 ; 83) being angularly spaced from the indentation (26) of the body (21) in the open position, so that the indentation (26) of the body (21) no longer allows the removal of the coupling element (17).

2. A device (20) according to claim 1, wherein the body (21) has a first part (22) and a second part (23) mounted on the first part (22) or in the first part (22), said first and second parts (22, 23) defining a housing (60) for the balls (7), the closing member (61; 83) being mounted in said housing (60).

3. A device (20) according to claim 2, wherein the second part (23) is attached to the first part (22) by latching means (40; 81, 82), said latching means (40; 81, 82) being adapted to allow latching of said parts (22, 23) and prevent the withdrawal of the second part (22) from the first part (23) after latching of said parts (22, 23).

4. A device (20) according to any of claims 1 to 3, wherein the closing member (83) and the body (21) have guide means (43; 90) for allowing the rotation of the closing member (83) relative to the body (21) only from an initial closed position to an open position and then only from the open position to a final closed position.

5. A device (20) according to claim 4, wherein the guide means (43, 68; 90) comprise a first latching zone (44; 91a) and a second latching zone (45 ; 91b) opposite, said latching zones being, for example, notched or toothed, said guide means (43, 68; 90) further comprising an elastic tab (68; 94) cooperating with the first latching zone (44; 91a) during the rotation of the closing member (61 ; 83) relative to the body (21), from its initial closed position to its open position, the elastic tab (68; 94) cooperating with the second latching zone (45; 91b) during the rotation of the closing member (61 ; 83) relative to the body (21) from its open position to its final closed position, the latching zones (44; 91a, 45; 91b) belonging to the closing member (61; 83), the elastic tab (68; 94) belonging to the body (21), or vice versa.

6. A device (20) according to claim 5, **characterized in that** each latching zone (44; 91a, 45; 91b) extends circumferentially in an arc of circle.

7. A device (1) according to claim 5, **characterized in that** each latching zone is toothed (91a, 91b) and generally extends in a radial plane, each tooth of the toothed zone having an inclined surface (98) relative to the corresponding radial plane and a stop surface (99) generally extending perpendicular to the radial plane.

8. A device (20) according to one of claims 4 to 7, wherein the guide means (90) includes stop means (100, 101) capable of limiting the rotation of the closing member between its open and closed positions.

9. A device (20) according to one of claims 1 to 8, wherein the closing member (61;83) comprises at least one helix portion or inclined surface (65; 87) inclined towards at least one opening (86) of the closing member (61; 83).

10. An assembly having a packaging device (20) according to one of claims 1 to 9, and a collecting device (1), the collecting device comprising:
a support (2), said support (2) comprising at least one opening (5) and collecting means (6), said opening (5) being intended to be located opposite the opening of the body of the packaging device (20),
a closing member (8) that can be moved relative to the support (2) between a closed position in which the closing member (8) closes the opening (5) of the support (2), and an open position in which the opening (5) of the support (2) is open,
a coupling member (18a) used for cooperating with the closing member (67) of the packaging device (20), the closing member (8) being movable in rotation relative to the coupling member (18a) of the collecting device (1), so that in the open position of the closing member (8) and the coupling member (12a) of the collecting device, the balls from the packaging device (20) pass through the openings of the closing member and the body of the packaging device and then the opening of the support of the collecting device before being conveyed to the collecting means.

11. An assembly according to claim 10, **characterized in that** it includes indexing means (13) capable of maintaining the closing member of the collecting device in the open and closed position respectively.
